# NEUE EUROPÄISCHE PATENTSCHRIFT

(11) **EP 1 104 369 B2**
(45) Veröffentlichungstag und Bekanntmachung des Hinweises auf die Entscheidung über den Einspruch: **14.03.2007**
(45) Hinweis auf die Patenterteilung: 22.01.2003
(21) Anmeldenummer: 99940171.4
(22) Anmeldetag: 07.08.1999
(51) Int. Cl.: B60S 9/08

(54) **VORRICHTUNG ZUM ABSTÜTZEN EINES AUFLIEGERS EINES SATTELSCHLEPPERS**
DEVICE FOR SUPPORTING A SEMI-TRAILER OF A SEMI-TRAILER TOWING VEHICLE
ELEMENT D'APPUI POUR REMORQUE DE SEMI-REMORQUE

(30) Priorität: 13.08.1998 DE 19836635
(43) Veröffentlichungstag der Anmeldung: 06.06.2001
(73) Patentinhaber: Jost-Werke GmbH & Co. KG, 60528 Frankfurt am Main (DE)
(72) Erfinder: ALGÜERA GALLEGO, Josè Manuel, D-63739 Aschaffenburg (DE); MÜLLER, Gerald, D-63110 Rodgau (DE); PFISTER, Steffen, D-63225 Langen (DE); Vandenberg,Ervin, Massillon, OH 44646 (US)
(74) Vertreter: Fuchs Mehler Weiss & Fritzsche
(86) Internationale Anmeldenummer: PCT/EP1999/005733
(87) Internationale Veröffentlichungsnummer: WO 2000/009372

(56) Entgegenhaltungen:
- EP-A- 0 675 029
- DE-A- 19 616 704
- DE-C- 4 221 958
- US-A- 2 232 187
- US-A- 3 201 086
- US-A- 3 259 364
- Zusammenstellungszeichnung Stützeinrichtung Typ 1070 K 001,Zeichnungsnummer 2147.20.0.00
- Zusammenstellungszeichnung Spindelstütz rechts, Ausf.K,Zeichnungsnummer 2147/1.24.0.00
- Auszug aus der haacon-Programmübersicht (Drucklegungsdatum 5/95)
- Lieferungsvorgang betreffend Stützeinrichtung Typ 1070 mit Bestellnummer 200191
- Rechnung betreffend Stützeinrichtung Typ 1070 mit Bestellnummer 200191
- Auszug aus der haacon-Programmübersicht (Drucklegungsdatum 7/97)
- Auszug aus den haacon-Produktblatt "Stützeinrichtungen für Stattelanhänger" (Drucklegungsdatum 8/96)
- "Umdruck zur Vorlesung Maschinenelemente", Auflage 1976, Prof. Dr.Ing. H.W. Müller, TH Darmstadt, Seite 6/3
- Auszug aus DIN-Norm 471

## Beschreibung

Die Erfindung betrifft eine Vorrichtung mit den Merkmalen des Oberbegriffs von Anspruch 1.

Eine Vorrichtung ist beispielsweise aus der EP - 0 675 029 bekannt. Hierbei befindet sich das Schaltgetriebe in einem an der äußeren Hülse befestigten Gehäuse. Das Gehäuse und eine dem Gehäuse gegenüberliegende Wandung der äußeren Hülse haben jeweils eine Lagerung für die Getriebeeingangswelle und eine Getriebeausgangswelle, auf der der Zahnradsatz drehfest angeordnet ist. Die Getriebeeingangswelle ist hierbei unterhalb und die Getriebeausgangswelle oberhalb der Kegelradanordnung angeordnet. Die Getriebeeingangswelle läßt sich mit einer Handkurbel drehen und wird an der Spindel außermittig vorbeigeführt. Die Getriebeausgangswelle ist durch das Gehäuse des Schaltgetriebes hindurchgeführt, so daß sich an dieser Stelle zwei gleiche Abstützelemente mit einer Welle verbinden und gleichmäßig in der Höhe verfahren lassen. Die mit dem durchmessergroßen Zahnrad der Getriebeeingangswelle in Verbindung mit einem durchmesserkleinen Zahnrad des Zahnradsatzes erzeugte Übersetzung dient zum schnellen Verstellen, während die mit dem Ritzel der Getriebeeingangswelle und einem durchmessergroßen Zahnrad des Zahnradsatzes erzeugte Übersetzung zur Verstellung der Höhe des Abstützelementes unter Last vorgesehen ist.

Aus der DE 196 16 704 A1 ist eine Antriebsvorrichtung für eine manuell antreibbare Hubeinrichtung, insbesondere eine Sattelstütze, bekannt, bei der das Getriebe in einem Getriebekasten und die Antriebsvorrichtung in einem Antriebsgehäuse außerhalb der Sattelstütze untergebracht sind. Dadurch werden keine besonderen Montageeinrichtungen notwendig und der benötigte Installationsraum wird nicht vergrößert.

Nachteilig bei den bekannten Vorrichtungen ist, daß das durchmessergroße Zahnrad der Getriebeeingangswelle infolge der Anordnung der Getriebeeingangswelle neben der Spindel seitlich über die äußere Hülse hinausragt oder einen sehr kleinen Durchmesser haben muß. Dies führt bei einem vorgesehenen Übersetzungsverhältnis zum möglichst schnellen Verstellen dazu, daß sich das Gehäuse für das Schaltgetriebe sehr ausladend und aufwendig gestaltet.

Eine Abstützvorrichtung für Auflieger wird ebenfalls in der US 3,259,364 beschrieben. Die bekannte Abstützvorrichtung weist zwei Stützbeine auf, die jeweils ein mit einer Spindel gegenüber einem Außenrohr teleskopierbares Innenrohr umfassen. Außerhalb eines Stützbeines ist an dem Außenrohr ein Getriebegehäuse mit einem zweistufigen Getriebe und einer Getriebeeingangswelle angeordnet, wobei die Getriebeeingangswelle auch in dem Getriebegehäuse gelagert ist. Aufgrund der Gewindesteigung der Spindel in Abhängigkeit mit den jeweiligen Übersetzungsverhältnissen des zweistufigen Getriebes ermöglicht die Abstützvorrichtung ein Anheben deutlich höherer Lasten bei gleichem Kraftaufwand an der Getriebeeingangswelle. Für eine akzeptable Verfahrgeschwindigkeit des Innenrohres ist jedoch ein durchmessergroßes Zahnrad auf der Getriebeeingangswelle notwendig, so daß das Getriebegehäuse ebenfalls deutlich größere Abmessungen als das Außenrohr aufweist.

Ein Verfahren zum Herstellen eines Zahnradelementes einer Ritzelwelle beschreibt die DE 42 21 958 C1, bei dem ausgehend von einem geschmiedeten oder gegossenen Rundblock durch mechanische Bearbeitung das Zahnradelement und der daran anschließende Wellenteil herausgearbeitet und die Verzahnung des Zahnradelementes mindestens im Flankenbereich geschliffen und/oder poliert ist. Eine gattungsgemäße vorrichtung ist bekannt aus einer gelieferten Stützeinrichtung für Sattelanhänger Typ 1070 k001 und den zugehörigen Zeichnungen der Firma haacon hebetechnik GmbH.

Der Erfindung liegt das Problem zugrunde, eine Vorrichtung der eingangs genannten Art so zu gestalten, daß sie möglichst kompakt aufgebaut ist.

Dieses Problem wird gelöst durch die Merkmale des Anspruchs 1.

Durch diese Gestaltung muß die Getriebeeingangswelle nicht mehr an der Spindel vorbeigeführt werden. Das durchmessergroße Zahnrad der Getriebeeingangswelle kann deshalb so groß gestaltet werden wie das größte Zahnrad des Zahnradsatzes oder der Kegelradanordnung, ohne dabei aus der Hülse des Abstützelementes hinauszuragen. Das Abstützelement der erfindungsgemäßen Vorrichtung gestaltet sich daher besonders kompakt.

Weiterhin läßt sich Dank der Erfindung das Getriebe mit der Getriebeeingangswelle kostengünstig von einer Seite des Abstützelementes her montieren. Der gemeinsame Lagerbock von Spindel und Getriebeeingangswelle ermöglicht eine weitere Verkleinerung des Bauraums. Darüber hinaus werden in dem Abstützelement weniger Bauteile verwendet.

Das Schaltgetriebe hat gemäß einer anderen vorteilhaften Weiterbildung der Erfindung besonders wenige Bauteile, wenn der Zahnradsatz einteilig mit der Getriebeausgangswelle gefertigt ist. Hierdurch gestaltet sich die Montage des Abstützelementes besonders einfach.

Das Abstützelement ist gemäß einer anderen vorteilhaften Weiterbildung der Erfindung konstruktiv besonders einfach aufgebaut, wenn ein durchmesserkleines Zahnrad des Zahnradsatzes als formschlüssige Verbindung der Getriebeausgangswelle mit einer Innenverzahnung der übrigen Zahnräder des Zahnradsatzes gestaltet ist. Hierdurch sind keine weiteren Befestigungsmittel für den Zahnradsatz auf der Getriebeausgangswelle erforderlich.

Das Schaltgetriebe läßt sich gemäß einer anderen vorteilhaften Weiterbildung der Erfindung mit einer geringeren Anzahl von standardisierten Bauteilen für verschiedene Abstufungen zusammenstellen, wenn ein durchmessergroßes Zahnrad des Zahnradsatzes eine Innenverzahnung aufweist und auf einer entsprechend gestalteten Außenverzahnung eines Kegelrades der Kegelradanordnung aufgesteckt ist.

Die Kupplungsmittel könnten beispielsweise bei einer rohrförmigen Gestaltung der Getriebeeingangswelle als verschiebbarer Ziehkeil zur Erzeugung eines Formschlusses der Zahnräder mit der Getriebeeingangswelle ausgebildet sein. Zur Verringerung der Anzahl der Bauteile des Schaltgetriebes trägt es jedoch gemäß einer anderen vorteilhaften Weiterbildung der Erfindung bei, wenn das Ritzel der Getriebeeingangswelle als Kupplungsmittel der Getriebeeingangswelle mit dem eine Innenverzahnung aufweisenden durchmessergroßen Zahnrad gestaltet ist. Die vorgesehene Schaltstellung des Schaltgetriebes kann hierbei dadurch gewählt werden, daß das Ritzel der Getriebeeingangswelle in eine in die Innenverzahnung des durchmessergroßen Zahnrades der Getriebeeingangswelle eingreifende Stellung oder in eine das durchmessergroße Zahnrad des Zahnradsatzes kämmende Stellung bewegt wird.

Das Schaltgetriebe hat gemäß einer anderen vorteilhaften Weiterbildung der Erfindung einen Freigang, bei der keine Übertragung von Drehmomenten von der Getriebeeingangswelle auf die Getriebeausgangswelle stattfindet, wenn das durchmessergroße Zahnrad der Getriebeeingangswelle einen topfförmigen, zur Aufnahme des Ritzels in einer mittleren Stellung vorgesehenen Bereich aufweist. Hierdurch wird das Verfahren zweier an den Getriebeausgangswellen miteinander verbundener Abstützelemente wesentlich erleichtert, da hierbei das Schaltgetriebe des nicht angetriebenen Abstützelementes nicht mitbewegt werden muß. Weiterhin wird durch diese Gestaltung das Schalten des Schaltgetriebes erleichtert.

Das durchmessergroße Zahnrad der Getriebeeingangswelle läßt sich gemäß einer anderen vorteilhaften Weiterbildung der Erfindung einfach an der Außenseite seines topfförmigen Bereichs lagern, wenn das Ritzel der Getriebeeingangswelle näher an der Spindel angeordnet ist als das durchmessergroße Zahnrad. Dies trägt zu einer weiteren Vereinfachung des Aufbaus des Schaltgetriebes bei.

Das Umschalten des Schaltgetriebes könnte beispielsweise dadurch erfolgen, daß das Ritzel auf der Getriebeeingangswelle verschoben wird. Dies erfordert jedoch einen hohen fertigungstechnischen Aufwand zur drehfesten und axial verschieblichen Halterung des Ritzels. Das Schaltgetriebe hat jedoch einen besonders geringen fertigungstechnischen Aufwand, wenn die Getriebeeingangswelle einteilig mit dem Ritzel gefertigt ist. Zum Schalten des Schaltgetriebes kann dann die Getriebeeingangswelle verschoben werden. Dies läßt sich ohne zusätzlichen baulichen Auffand von außerhalb des Abstützelementes erreichen.

Das Abstützelement läßt sich gemäß einer anderen vorteilhaften Weiterbildung der Erfindung besonders kostengünstig fertigen, wenn die Getriebeeingangswelle und die Getriebeausgangswelle in einer eine Öffnung der äußeren Hülse verschließenden Abdeckung gelagert sind.

Zur weiteren Verringerung der Fertigungskosten für das Abstützelement trägt es gemäß einer anderen vorteilhaften Weiterbildung der Erfindung bei, wenn die Abdeckung einteilig gestaltet ist.

Die verschieblich gestaltete Getriebeeingangswelle könnte wie bei der bekannten Vorrichtung eine Bohrung aufweisen, in der radial nach außen vorgespannte, in Nuten des Gehäuses des Getriebes eingreifende Rastelemente angeordnet sind. Eine kostenintensive Bohrung in der Getriebeeingangswelle läßt sich einfach vermeiden, wenn die Getriebeeingangswelle zumindest eine Nut zur Aufnahme von in Kartuschen der Abdeckung oder des Lagerbocks angeordneten, radial nach innen hin vorgespannten Rastelementen aufweist.

Die Abdeckung könnte beispielsweise kostengünstig aus Kunststoff gefertigt sein. Die Abdeckung hat jedoch gemäß einer anderen vorteilhaften Weiterbildung der Erfindung eine besonders hohe Stabilität, wenn sie aus einem Sinterwerkstoff gefertigt ist.

Das Schaltgetriebe läßt sich gemäß einer anderen vorteilhaften Weiterbildung vollständig in der äußeren Hülse des Abstützelementes montieren, wenn die Spindel außerhalb der Mitte des Abstützelementes angeordnet ist. Dank der Erfindung werden die Zahnräder des Schaltgetriebes vollständig durch die zwangsläufig sehr stabile äußere Hülse vor Beschädigung geschützt, so daß die Abdeckung für das Getriebe besonders klein und leicht aufgebaut sein kann. Diese Gestaltung trägt zudem zu einem besonders kompakten Aufbau des Abstützelementes bei.

Das Abstützelement läßt sich gemäß einer weiteren vorteilhaften Weiterbildung der Erfindung mit einem Elektromotor versehen. Der Elektromotor ist vorzugsweise für den Lastgang vorgesehen. Die Ausgangswelle des Elektromotors ist vorzugsweise mit der Getriebeeingangswelle identisch.

Die Spindelmutter weist vorzugsweise einen topfförmigen Innenraum auf, der durch drei auf gleicher Höhe befindliche Kragenabschnitte begrenzt ist. In diesen topfförmigen Innenraum greift der Lagerbock ein, wenn die Spindelmutter nach oben gefahren wird. Die Spindelmutter kann dadurch deutlich weiter nach oben bewegt werden als dies bisher möglich war. Im Bereich des durchmessergroßen Zahnrades weist die Spindelmutter einen tieferliegenden Kragenabschnitt auf. Dadurch kann das durchmessergroße Zahnrad des Schaltgetriebes sich zumindest teilweise in den Bereich der Spindelmutter erstrecken, wodurch die kompakte Anordnung weiter verbessert wird.

Um an der Oberseite der Spindelmutter ein Schmiermittelreservoir für die Spindel vorsehen zu können, weist die Spindelmutter vorzugsweise oberhalb des tieferliegenden Kragenabschnitts eine sich nach oben erstreckende Zwischenwand auf.

Der Lagerbock weist vorteilhafterweise eine Vertiefung auf, in die sich das auf der Spindel befindliche Kegelrad zumindest teilweise erstreckt. Neben der kompakten Anordnung wird dadurch auch eine Gewichtsreduzierung erreicht.

Die Lagerung der Gewindeeingangswelle im Lagerbock erfolgt durch eine Lagerbohrung, die sich vorzugsweise bis zur Durchgangsbohrung für die Spindel erstreckt.

Vorzugsweise ist der Lagerbock nur an drei Seiten mit der äußeren Hülse verbunden, insbesondere verschweißt, wobei die vierte Seite beabstandet zur äußeren Hülse angeordnet ist. Daduch wird zwischen Lagerbock und äußerer Hülse ein Freiraum geschaffen, der für das durchmessergroße Zahnrad des Zahnradsatzes genutzt werden kann. Dadurch ist es möglich, dieses durchmessergroße Zahnrad vollständig nach innen zu verlegen. Die Spindelmutter ist durch den tieferliegenden Kragenabschnitt hierauf abgestimmt.

Unterhalb des durchmessergroßen Zahnrades ist vorzugsweise eine Auffangwanne für Schmiermittel angeordnet.

Insgesamt wird eine Anordnung geschaffen, bei der die Getriebeeingangswelle unterhalb der Getriebeausgangswelle angeordnet ist und Spindel und Wellen in einer Ebene liegen. Die Getriebeausgangswelle steht hierbei senkrecht auf der Spindelachse.

Zur Vergrößerung des Innenraumes im Bereich des Schaltgetriebes weist die äußere Hülse vorzugsweise örtliche Ausprägungen auf. Diese örtlichen Ausprägungen befinden sich in den runden Abschnitten der äußeren Hülse.

Sämtliche Bauteile sind hinsichtlich einer kompakten Anordnung optimiert, so daß das gesamte Getriebe innerhalb der äußeren Hülse angeordnet werden kann. Ein weiterer Vorteil besteht darin, daß das Übersetzungsverhältnis des Getriebes bei gleichem Hülsendurchmesser gegenüber herkömmlichen Abstützelementen deutlich erhöht werden konnte.

Zur weiteren Verdeutlichung des Grundprinzips der Erfindung ist eine Ausführungsform davon in der Zeichnung dargestellt und wird nachfolgend beschrieben. Diese zeigt in
- Fig. 1: eine Seitenansicht eines von einer erfindungsgemäßen Vorrichtung abgestützten Aufliegers,
- Fig. 2: eine vergrößerte Ansicht von vorne auf den Auflieger aus Figur 1,
- Fig. 3: einen Längsschnitt durch den oberen Bereich des Abstützelementes der erfindungsgemäßen Vorrichtung aus Figur 1,
- Fig. 4: das Abstützelement aus Figur 3 in einer zweiten Schaltstellung,
- Fig. 5: eine weitere Ausführungsform des Abstützelementes mit Elektromotor,
- Fig. 6a: eine perspektivische Darstellung der Spindelmutter,
- Fig. 6b, c: Vertikalschnitt durch die in Fig. 6a gezeigt Spindelmutter,
- Fig. 7a, b: einen Vertikalschnitt und eine Draufsicht auf einen Lagerbock,
- Fig. 8: eine perspektivische Darstellung des Außenrohrs,
- Fig. 9a bis c: Detaildarstellungen der Kegelradanordnung.

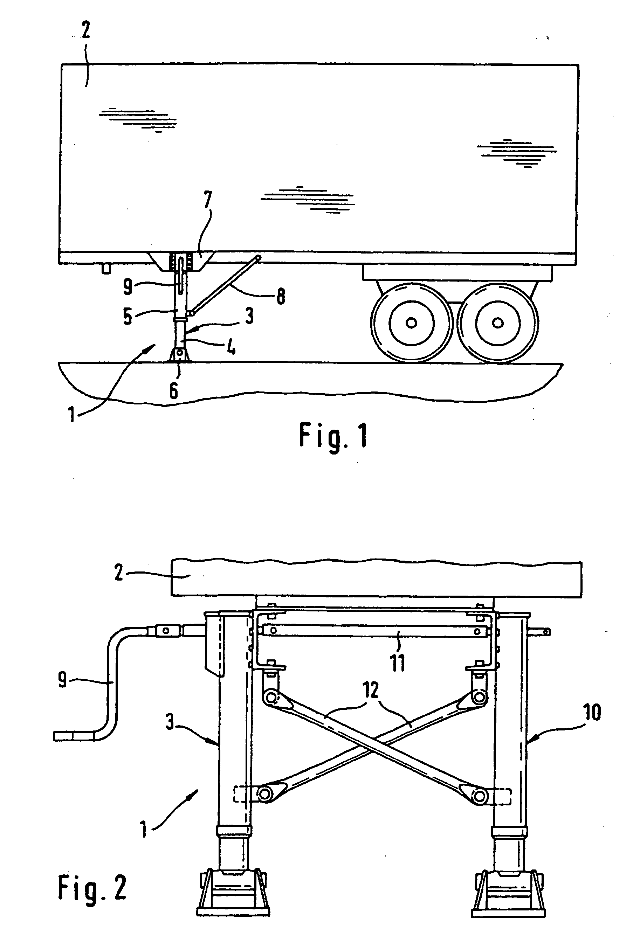

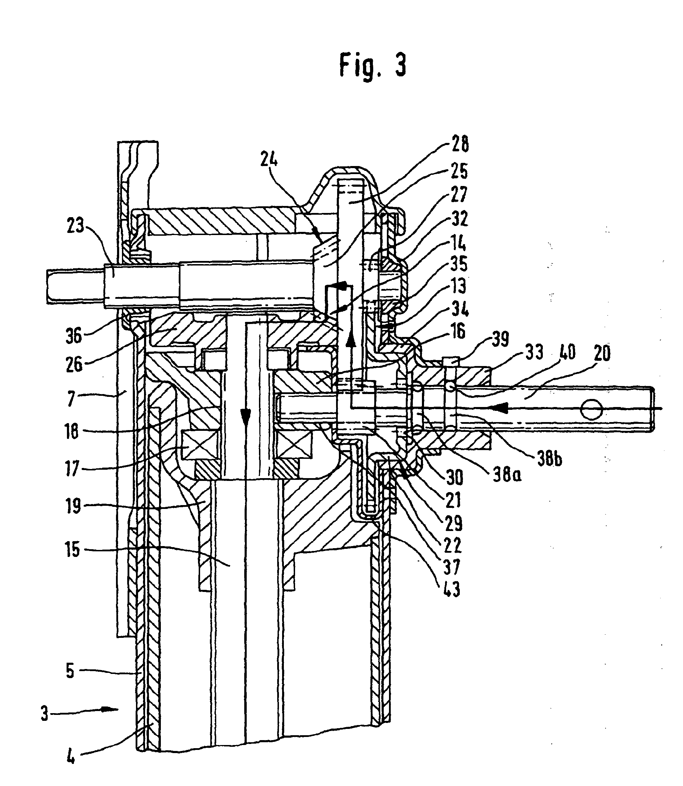

Die Figur 1 zeigt einen von einer erfindungsgemäßen Vorrichtung 1 abgestützten Auflieger 2 eines Sattelschleppers. Die Vorrichtung 1 hat ein teleskopartig in seiner Höhe verfahrbares Abstützelement 3 mit einer inneren Hülse 4 und einer äußeren Hülse 5. Die innere Hülse 4 stützt sich über einen Fuß 6 am Boden ab. Die äußere Hülse 5 ist an einer Platte 7 des Aufliegers 2 befestigt. Zur Erhöhung der Kippsicherheit ist zwischen der äußeren Hülse 5 und dem Auflieger 2 eine Querstrebe 8 angeordnet. In seinem oberen Bereich hat das Abstützelement 3 eine Handkurbel 9.

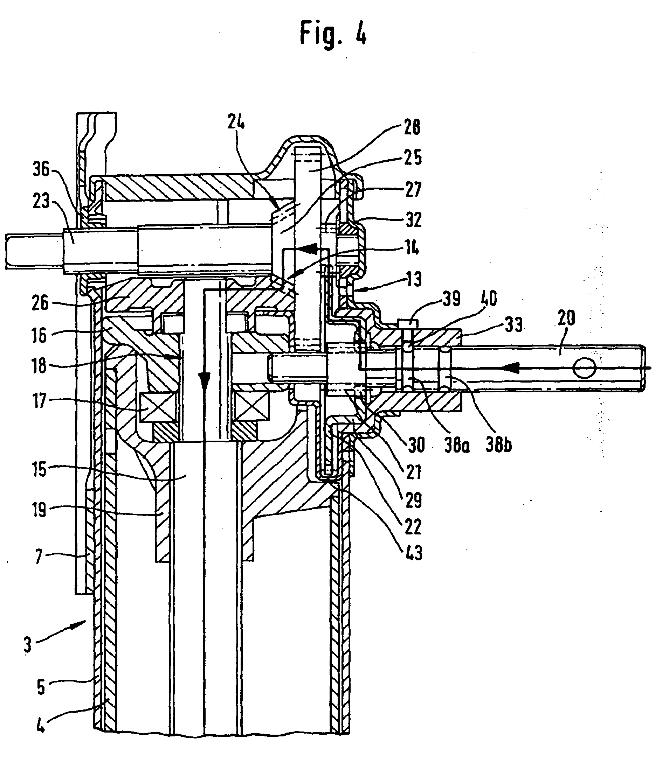

Die Figur 2 zeigt den Auflieger 2 und die erfindungsgemäße Vorrichtung 1 aus Figur 1 in einer Ansicht von vorne. Hierbei ist zu erkennen, daß die erfindungsgemäße Vorrichtung 1 ein zweites Abstützelement 10 hat, welches über eine Welle 11 mit dem einen Abstützelement 3 gekoppelt ist. Durch diese Kopplung lassen sich die beiden Abstützelemente 3, 10 gleichzeitig in ihrer Höhe verfahren. Zwischen den Abstützelementen 3, 10 sind ebenfalls zur Erhöhung der Kippsicherheit zwei Querstreben 12 angeordnet.

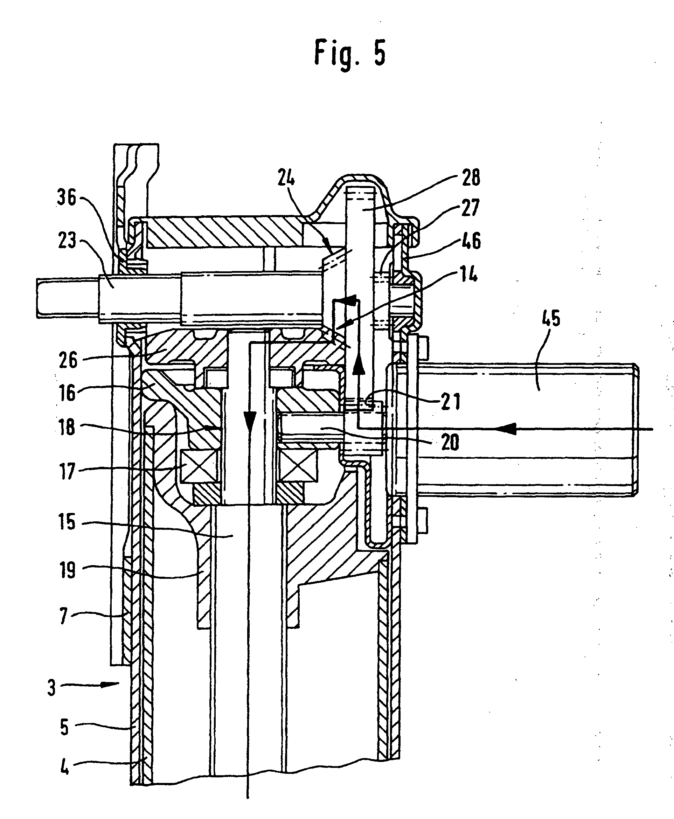

Die Figur 3 zeigt den oberen Bereich des Abstützelementes 3 aus Figur 1 in einem stark vergrößerten Längsschnitt. Das Abstützelement 3 hat eine über ein Schaltgetriebe 13 und eine Kegelradanordnung 14 antreibbare Spindel 15. An der äußeren Hülse 5 ist ein Lagerbock 16 der Spindel 15 mit einem Axiallager 17 und einem Radiallager 18 befestigt. An der inneren Hülse 4 stützt sich eine mit der Spindel 15 in Eingriff stehende Spindelmutter 19 ab. Durch eine Drehung der Spindel 15 kann man die Hülsen 4, 5 auseinanderfahren und damit die Höhe des Abstützelementes 3 verstellen.

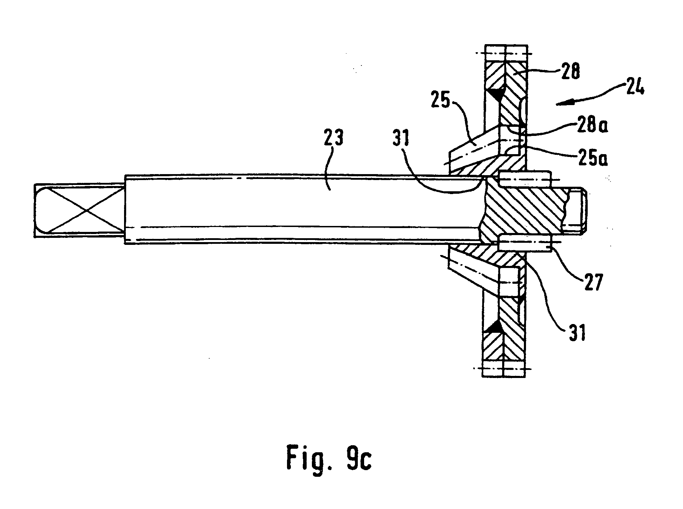

Das Schaltgetriebe 13 hat eine Getriebeeingangswelle 20 mit einem darauf befestigten Ritzel 21 und mit einem durchmessergroßen Zahnrad 22 und eine Getriebeausgangswelle 23 mit einem Zahnradsatz 24. Der Zahnradsatz 24 und die Spindel 15 sind jeweils drehfest mit einem Kegelrad 25, 26 der Kegelradanordnung 14 verbunden. Die Getriebeeingangswelle 20 und die Getriebeausgangswelle 23 führen jeweils aus dem Abstützelement 3 heraus. An die Getriebeeingangswelle 20 läßt sich die in Figur 1 dargestellte Handkurbel 9 oder ein Elektromotor anschließen. An der Getriebeausgangswelle 23 kann man die in Figur 2 dargestellte Welle 11 zur Kopplung mit dem zweiten Abstützelement 10 anschließen. Das Ritzel 21 ist einteilig mit der Getriebeeingangswelle 20 gefertigt. Das durchmessergroße Zahnrad 22 weist einen topfförmigen Bereich 29 und eine dem Ritzel 21 entsprechende Innenverzahnung 30 auf. Durch das topfförmige Zahnrad 22 wird zusätzlicher Freiraum geschaffen, so daß eine kompakte Anordnung möglich wird. Der Zahnradsatz 24 hat ein einteilig mit der Getriebeausgangswelle 23 gefertigtes durchmesserkleines Zahnrad 27 und ein durchmessergroßes Zahnrad 28. Das durchmesserkleine Zahnrad 27 steht ständig im Eingriff mit dem durchmessergroßen Zahnrad 22 der Getriebeeingangswelle 20. Das durchmessergroße Zahnrad 28 hat eine Innenverzahnung 28a, mit der es auf einer Verzahnung 25a des Kegelrades 25 aufgesteckt ist (s. Fig. 9c). Hierdurch sind die Zahnräder 25, 27, 28 des Zahnradsatzes 24 drehfest auf der Getriebeausgangswelle 23 gehalten.

Die Getriebeeingangswelle 20 kann axial verschoben werden, so daß sich das Ritzel 21 wahlweise im Eingriff mit dem durchmessergroßen Zahnrad 28 der Getriebeausgangswelle 23 oder mit der Innenverzahnung 30 des durchmessergroßen Zahnrades 22 der Getriebeeingangswelle 20 befindet. Weiterhin läßt sich das Ritzel 21 in den topfförmigen Bereich 29 des durchmessergroßen Zahnrades 22 verschieben. Hierdurch hat das Schaltgetriebe 13 einen Freigang. In der eingezeichneten Stellung befindet sich das Ritzel 21 im Eingriff mit dem durchmessergroßen Zahnrad 28 des Zahnradsatzes 24 der Getriebeausgangswelle 23. Diese Schaltstellung kennzeichnet eine kurze Übersetzung des Schaltgetriebes 13. Hierbei kann das Abstützelement 3 beispielsweise unter Last verstellt werden. Zur Verdeutlichung ist in der Zeichnung der Kraftfluß von der Getriebeeingangswelle 20 zu der Spindel 15 mit Pfeilen gekennzeichnet. In allen Schaltstellungen ist das durchmessergroße Zahnrad 22 ständig mit dem durchmesserkleinen Zahnrad 27 der Getriebeausgangswelle 23 in Eingriff.

Das Schaltgetriebe 13 ist nahezu vollständig innerhalb der äußeren Hülse 5 angeordnet. In diesem Bereich weist die äußere Hülse 5 eine Abdeckung 32 mit Lagern 33, 34, 35 für die Getriebeausgangswelle 23, die Getriebeeingangswelle 20 und für den topfförmigen Bereich 29 des durchmessergroßen Zahnrades 22 der Getriebeeingangswelle 20 auf. Ein weiteres Lager 36 für die Getriebeausgangswelle 23 befindet sich in einer der Abdeckung 32 gegenüberliegenden Wandung der äußeren Hülse 5. Eine radiale Lagerung 37 für die Getriebeeingangswelle 20 ist in dem Lagerbock 16 der Spindel 15 angeordnet. Die Getriebeeingangswelle 20 hat zwei Nuten 38a, b, in die ein in einer Kartusche 39 der Abdeckung 32 angeordnetes, radial nach innen hin vorgespanntes Rastelement 40 eingreifen kann. In der hier gezeigten Schaltstellung greift das Rastelement 40 in die Nut 38b ein. Hierdurch wird die Getriebeeingangswelle 20 in der eingezeichneten Stellung gehalten. Unterhalb des durchmessergroßen Zahnrades 22 der Getriebeeingangswelle 20 und des Ritzels 21 befindet sich eine Auffangwanne 43 für Schmierstoff.

Die Figur 4 zeigt das Abstützelement 3 aus Figur 3, bei dem das Schaltgetriebe 13 für eine langen Übersetzung geschaltet ist. Hierbei ist gegenüber der in Figur 3 dargestellten Schaltstellung die Getriebeeingangswelle 20 soweit aus dem Abstützelement 3 herausgezogen, daß das Ritzel 21 in die Innenverzahnung 30 des durchmessergroßen Zahnrades 22 eingreift. In dieser Schaltstellung läßt sich das Abstützelement 3 ohne Last sehr schnell verstellen. Weiterhin zeigt Figur 4, daß das Rastelement 40 in die Nut 38a der Getriebeeingangswelle 20 eingreift.

In der Fig. 5 ist eine weitere Ausführungsform mit einem Elektromotor 45 dargestellt, dessen Ausgangswelle mit der Getriebeeingangswelle 20 identisch ist. Der Elektromotor 45 ist ein schnell drehender Motor, der für den Lastgang vorgesehen ist.

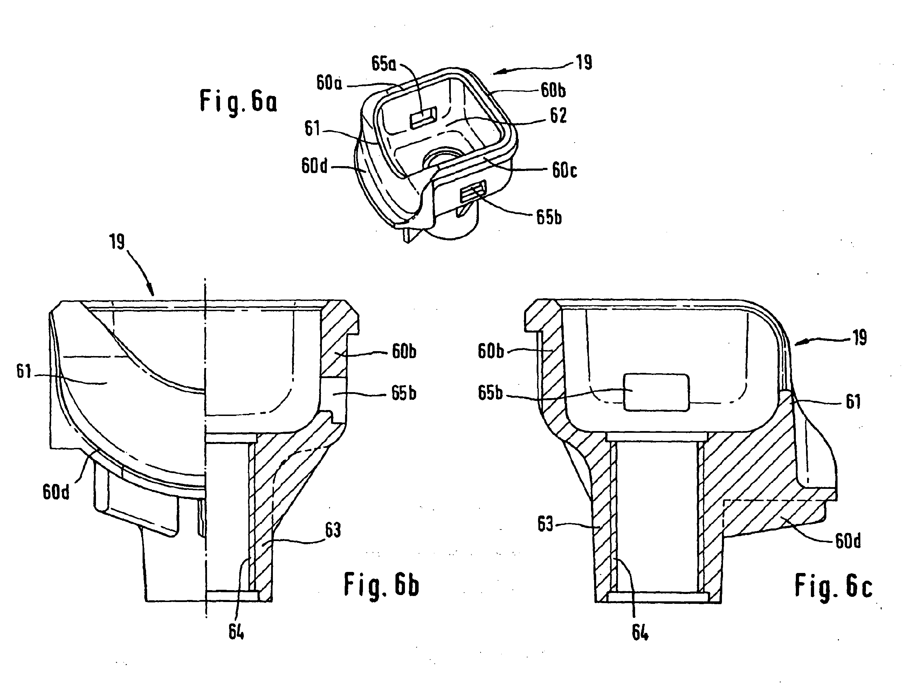

In den Fig. 6a bis c ist die Spindelmutter 19 perspektivisch und im Schnitt dargestellt. Zur Aufnahme des Lagerbocks 16 und der Axiallagerung 17 sowie zur Bildung eines Schmiermittelreservoirs für die Spindel 15 ist ein topfförmiger Innenraum 62 vorgesehen, der an drei Seiten durch die Kragenabschnitte 60a, b, c begrenzt wird, die mit der inneren Hülse 4 verbunden sind. In den Kragenabschnitten 60a und c sind Öffnungen 65a und b zum Verklinken mit dem Innenrohr 4 vorgesehen. Im Gegensatz zu herkömmlichen Spindelmuttern ist der vierte Kragenabschnitt 60d nach unten gezogen, um somit Platz für das Zahnrad 22 zu schaffen, wie dies in der Fig. 3 zu sehen ist. Die innere Hülse 4 ist an die Ausgestaltung der Kragenabschnitte 60a bis d angepaßt, wobei die große Überdeckung mit der äußeren Hülse 5 im ausgefahrenen Zustand erhalten bleibt. Es wird dadurch eine kompakte Anordnung erzielt.

Um den topfförmigen Innenraum 62 abzuschließen, ist eine zusätzliche Zwischenwand 61 oberhalb des Kragenabschnitts 60d vorgesehen, die sich wegen der Lagerung der Getriebeeingangswelle 20 im Lagerbock 16 nicht so weit nach oben erstreckt, wie die Kragenabschnitte 60a bis c.

Wie der Fig. 6b zu entnehmen ist, bildet der Kragenabschnitt 60d im wesentlichen einen horizontalen Vorsprung des Mutterkörpers 63, in dem sich das Innengewinde 64 für die Spindel 15 befindet.

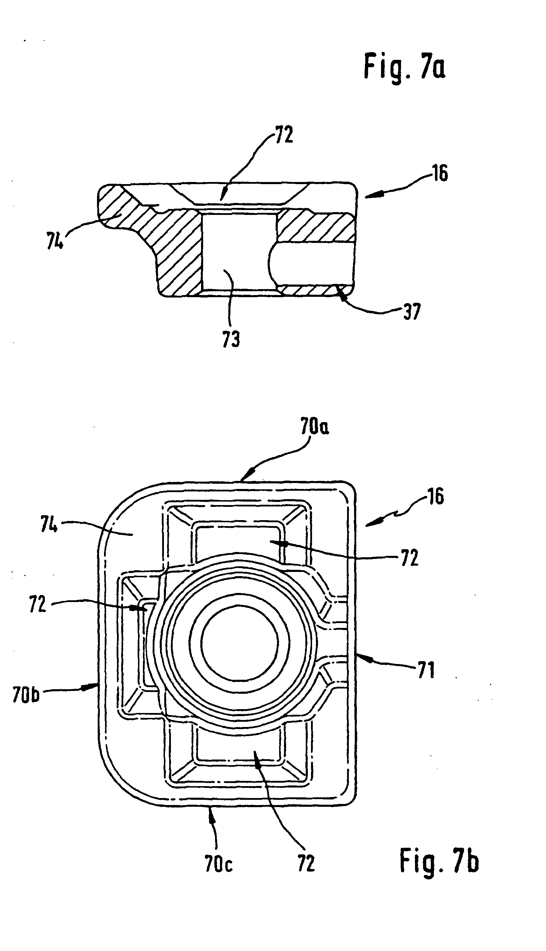

In den Fig. 7a und b ist der Lagerbock 16 im Schnitt und in Draufsicht dargestellt. Die Bohrung für die Lagerung 37 der Gewindeeingangswelle 20 erstreckt sich bis zur Bohrung 73 für die Spindel 15. Dadurch wird der zur Verfügung stehende Raum für die Lagerung der Getriebeeingangswelle 20 vollständig genutzt. An der Oberseite besitzt der Lagerbock 16 eine kreuzförmige Vertiefung 72, die sowohl zur Gewichtsreduzierung als auch zum Eingreifen des Kegelrades 26 dient. Die Randrippen 74 dienen zur Versteifung und zur Kraftübertragung auf die äußere Hülse 5, wobei lediglich die drei Seiten 70a bis c in die äußere Hülse 5 eingeschweißt sind. Die Seite 71 ist nicht eingeschweißt und ist dem Zahnrad 28 benachbart. Auch diese Ausgestaltung des Lagerbocks 16 trägt zur kompakten Bauweise bei.

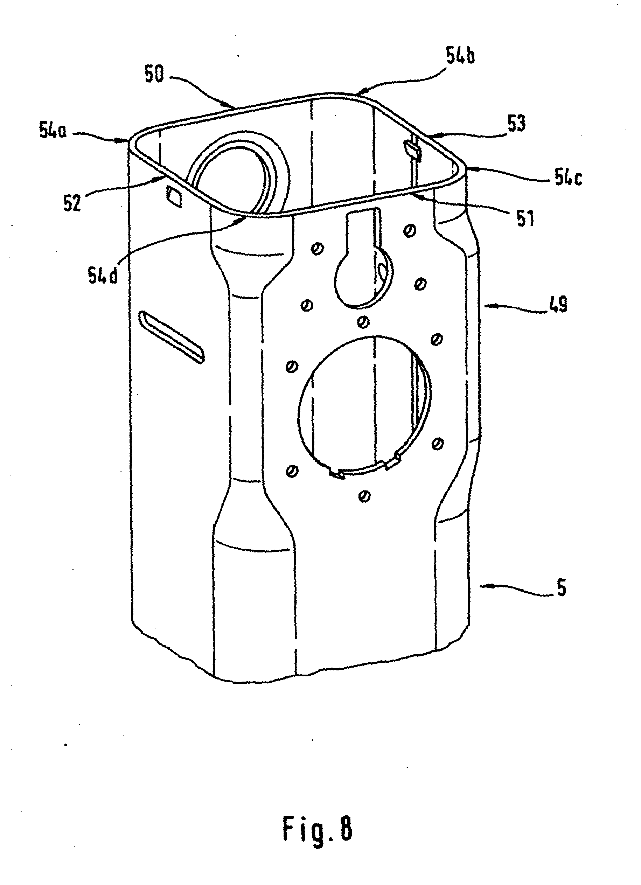

In der Fig. 8 ist die äußere Hülse 5 perspektivisch dargestellt, die als Vierkantrohr mit den Seitenwänden 50 bis 53 und den runden Abschnitten 54a bis d ausgebildet ist. Aus optischen Gründen und aus Gründen der Gewichtsreduzierung wurden für diese runden Abschnitte 54a bis d große Radien gewählt. Im oberen Bereich der äußeren Hülse 5 haben diese großen Radien jedoch den Nachteil, daß nicht ausreichend Platz für die Zahnradanordnung und insbesondere für das Zahnrad 28 zur Verfügung steht, das einen möglichst großen Durchmesser aufweisen soll. Um den Innenraum im Bereich der Zahnradanordnung zu vergrößern und somit voll nutzen zu können, sind durch Auspressen Ausprägungen 49 in die runden Abschnitte 54c und d eingebracht worden, die damit einen geringeren Radius aufweisen.

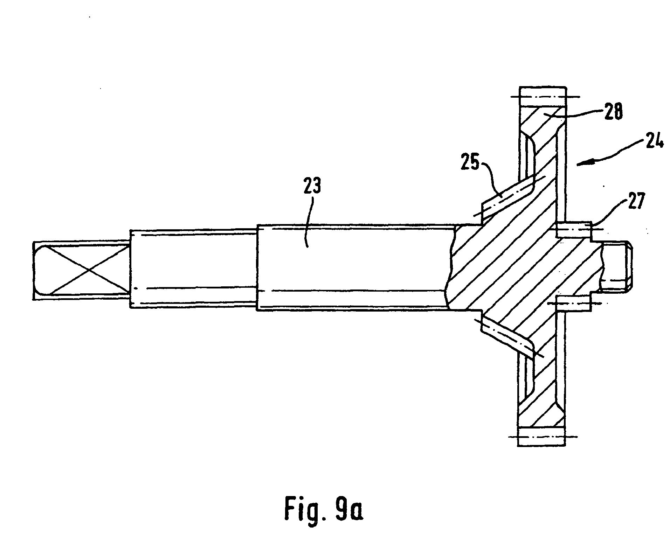

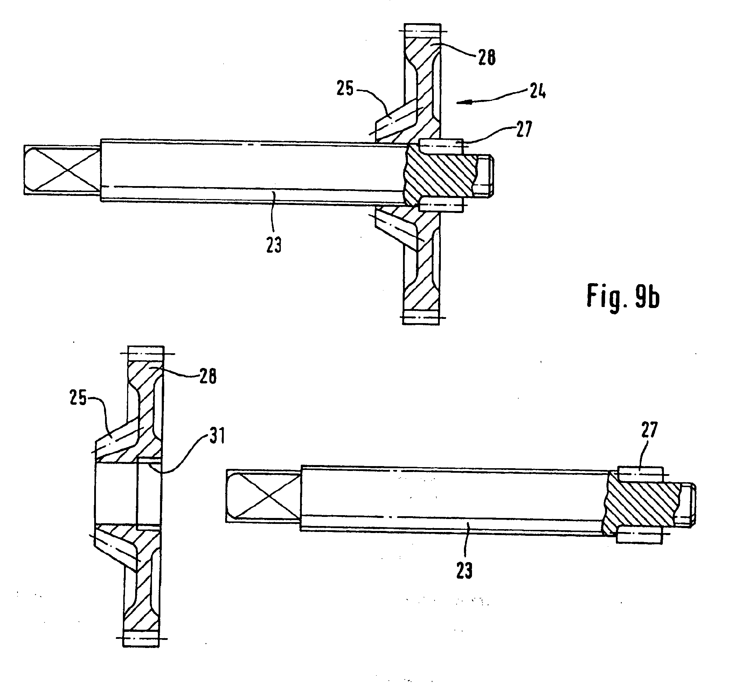

Die Fig. 9a bis c zeigen verschiedene Varianten von Getriebeausgangswelle 23, Kegelrad 25 und Zahnräder 27, 28. In der Fig. 9a sind sämtliche Bauteile einstückig als Zahnradsatz 24 ausgebildet. In der Fig. 9b ist das Kegelrad 25 und das Zahnrad 28 einstückig gefertigt, wobei dieses Bauteil eine Innenverzahnung 31 aufweist, mittels derer die Getriebeausgangswelle 23, die einstückig mit dem Zahnrad 27 versehen ist, befestigt werden kann.

In der Fig. 9c sind die Bauteile 23, 25 und 28 eigenständige Bauteile, die mittels der Verzahnungen 28a, 25a und 31 zusammengefügt werden. Auch bei dieser Ausführungsform ist die Getriebeausgangswelle 23 einstückig mit dem Zahnrad 27 versehen.

### Bezugszeichen

- 1: Vorrichtung
- 2: Auflieger
- 3: Abstützelement
- 4: innere Hülse
- 5: äußere Hülse
- 6: Fuß
- 7: Platte
- 8: Querstrebe
- 9: Handkurbel
- 10: Abstützelement
- 11: Welle
- 12: Querstrebe
- 13: Schaltgetriebe
- 14: Kegelradanordnung
- 15: Spindel
- 16: Lagerbock
- 17: Axiallager
- 18: Radiallager
- 19: Spindelmutter
- 20: Getriebeeingangswelle
- 21: Ritzel
- 22: Zahnrad
- 23: Getriebeausgangswelle
- 24: Zahnradsatz
- 25: Kegelrad
- 25a: Verzahnung
- 26: Kegelrad
- 27: Zahnrad
- 28: Zahnrad
- 28a: Innenverzahnung
- 29: topfförmiger Bereich
- 30: Innenverzahnung
- 31: Innenverzahnung
- 32: Abdeckung
- 33: Lager
- 34: Lager
- 35: Lager
- 36: Lager
- 37: Lagerung
- 38a, b: Nut
- 39: Kartusche
- 40: Rastelement
- 43: Auffangwanne
- 45: Elektromotor
- 49: Ausprägung
- 50-53: Seitenwand
- 54a-d: runder Abschnitt
- 60a-c,d: Kragenabschnitt
- 61: Zwischenwand
- 62: topfförmiger Innenraum
- 63: Mutterkörper
- 64: Innengewinde
- 65a, b: Öffnung
- 70a-c: eingeschweißte Seite
- 71: freie Seite
- 72: kreuzförmige Vertiefung
- 73: Durchgangsbohrung
- 74: Randrippe

## Patentansprüche

1. Vorrichtung zum Abstützen eines Aufliegers eines Sattelschleppers mit einem in seiner Höhe teleskopartig verfahrbaren, eine äußere Hülse (5) und eine innere Hülse (4) aufweisenden Abstützelement (3), mit einer in dem Abstützelement (3) gelagerten, von einem mehrstufigen Schaltgetriebe (13) über eine Kegelradanordnung (14) antreibbaren Spindel (15), und mit einer mit der Spindel (15) zusammenwirkenden, mit einer der Hülsen (4) in Eingriff stehenden Spindelmutter (19), wobei das Schaltgetriebe eine ein Ritzel (21) und ein durchmessergroßes Zahnrad (22) aufweisende Getriebeeingangswelle (20), einen drehbar gelagerten, mit den Zahnrädern (21,22) der Getriebeeingangswelle (20) und der Kegelradanordnung (14) zusammenwirkenden Zahnradsatz (24) sowie schaltbare Kupplungsmittel aufweist, welche zum wahlweisen Verbinden der Getriebeeingangswelle (20) über eines der Zahnräder (21,22) mit Zahnrädern (27,28) des Zahnradsatzes (24) ausgebildet sind, welche ein durchmesserkleines und ein durchmessergroßes Zahnrad (27, 28) sind, wobei die Spindel (15) senkrecht auf die Getriebeeingangswelle (20) zuläuft, und die Spindel (15) und die Getriebeeingangswelle (230) in einem gemeinsamen Lagerbock (16) gelagert sind, **dadurch gekennzeichnet,**
**dass** das durchmesserkleine Zahnrad (27) ständig in Eingriff mit dem durchmessergroßen Zahnrad (22) der Getriebeeingangswelle (20) steht.

2. Vorrichtung nach Anspruch 1, **dadurch gekennzeichnet, daß** der Zahnradsatz (24) einteilig mit einer Getriebeausgangswelle (23) gefertigt ist.

3. Vorrichtung nach Anspruch 1, **dadurch gekennzeichnet, daß** das durchmesserkleine Zahnrad (27) des Zahnradsatzes (24) als formschlüssige Verbindung der Getriebeausgangswelle (23) mit einer Innenverzahnung (31) der übrigen Zahnräder (25, 28) des Zahnradsatzes (24) gestaltet ist.

4. Vorrichtung nach zumindest einem der vorhergehenden Ansprüche, **dadurch gekennzeichnet, daß** das durchmessergroße Zahnrad (28) des Zahnradsatzes (24) eine Innenverzahnung (28a) aufweist und auf einer entsprechend gestalteten Verzahnung (25a) eines Kegelrades (25) der Kegelradanordnung (14) aufgesteckt ist.

5. Vorrichtung nach einem der vorhergehenden Ansprüche, **dadurch gekennzeichnet, daß** das Ritzel (21) der Getriebeeingangswelle (20) als Kupplungsmittel der Getriebeeingangswelle (20) mit dem eine Innenverzahnung (30) aufweisenden durchmessergroßen Zahnrad (22) gestaltet ist.

6. Vorrichtung nach einem der vorhergehenden Ansprüche, **dadurch gekennzeichnet, daß** das durchmessergroße Zahnrad (22) der Getriebeeingangswelle (20) einen topfförmigen, zur Aufnahme des Ritzels (21) in einer mittleren Stellung vorgesehenen Bereich (29) aufweist.

7. Vorrichtung nach einem der vorhergehenden Ansprüche, **dadurch gekennzeichnet, daß** das Ritzel (21) der Getriebeeingangswelle (20) näher an der Spindel (15) angeordnet ist als das durchmessergroße Zahnrad (22).

8. Vorrichtung nach einem der vorhergehenden Ansprüche, **dadurch gekennzeichnet, daß** die Getriebeeingangswelle (20) einteilig mit dem Ritzel (21) gefertigt ist.

9. Vorrichtung nach einem der vorhergehenden Ansprüche, **dadurch gekennzeichnet, daß** die Getriebeeingangswelle (20) und die Getriebeausgangswelle (23) in einer eine Öffnung der äußeren Hülse (5) verschließenden Abdeckung (32) gelagert sind.

10. Vorrichtung nach Anspruch 9, **dadurch gekennzeichnet, daß** die Abdeckung (32) einteilig gestaltet ist.

11. Vorrichtung nach einem der vorhergehenden Ansprüche, **dadurch gekennzeichnet, daß** die Getriebeeingangswelle (20) zumindest eine Nut (38) zur Aufnahme von in Kartuschen (39) der Abdeckung (32) oder des Lagerbocks (16) angeordneten, radial nach innen hin vorgespannten Rastelementen (40) aufweist.

12. Vorrichtung nach einem der vorhergehenden Ansprüche, **dadurch gekennzeichnet, daß** die Abdeckung (32) aus einem Sinterwerkstoff gefertigt ist.

13. Vorrichtung nach einem der vorhergehenden Ansprüche, **dadurch gekennzeichnet, daß** die Spindel (15) außerhalb der Mitte des Abstützelementes (3) angeordnet ist.

14. Vorrichtung nach einem der vorhergehenden Ansprüche, **gekennzeichnet durch** einen Elektromotor (45), dessen Ausgangswelle mit der Getriebeeingangswelle (20) identisch ist.

15. Vorrichtung nach einem der Ansprüche 1 bis 14, **dadurch gekennzeichnet, daß** die Spindelmutter (19) einen nach oben offenen topfförmigen Innenraum (62) aufweist.

16. Vorrichtung nach Anspruch 15, **dadurch gekennzeichnet, daß** der Innenraum (62) der Spindelmutter (19) durch drei auf gleicher Höhe befindliche Kragenabschnitte (60a bis c) begrenzt ist, und daß die Spindelmutter (19) im Bereich des durchmessergroßen Zahnrades (22) einen tieferliegenden Kragenabschnitt (60d) aufweist.

17. Vorrichtung nach Anspruch 16, **dadurch gekennzeichnet, daß** die Spindelmutter (19) oberhalb des tieferliegenden Kragenabschnittes (60d) eine sich nach oben erstreckende Zwischenwand (61) aufweist.

18. Vorrichtung nach einem der vorhergehenden Ansprüche, **dadurch gekennzeichnet, daß** der Lagerblock (16) an seiner Oberseite eine Vertiefung (72) aufweist.

19. Vorrichtung nach einem der vorhergehenden Ansprüche, **dadurch gekennzeichnet, daß** sich in dem Lagerbock (16) die Lagerbohrung (37) für die Gewindeeingangswelle (20) bis zur Durchgangsbohrung (73) für die Spindel (15) erstreckt.

20. Vorrichtung nach einem der vorhergehenden Ansprüche, **dadurch gekennzeichnet, daß** der Lagerbock (16) an drei Seiten (70a-c) mit der äußeren Hülse (5) verbunden ist, wobei die vierte Seite (70d) beabstandet zur äußeren Hülse (5) angeordnet ist.

21. Vorrichtung nach einem der vorhergehenden Ansprüche, **dadurch gekennzeichnet, daß** unterhalb des Zahnrades (22) eine Auffangwanne (43) für Schmiermittel angeordnet ist.

22. Vorrichtung nach einem der vorhergehenden Ansprüche, **dadurch gekennzeichnet, daß** die äußere Hülse (5) im Bereich des Schaltgetriebes (13) örtliche Ausprägungen (49) aufweist.

## Claims

1. Device for supporting a trailer of an articulated lorry with a telescopically height-adjustable supporting element (3) having an outer sleeve (5) and an inner sleeve (4), with a spindle (15) mounted in the supporting element (3) and driven by a multistep gear transmission via a bevel gear arrangement (14), and with a spindle nut (19) that interacts with the spindle (15) and is in engagement with one of the sleeves (4), wherein the gear transmission has a transmission input shaft (20) having a pinion (21) and a large-diameter gear wheel (22), a rotatably mounted gear wheel set (24) interacting with the gear wheels (21, 22) of the input shaft (20) and of the bevel gear arrangement (14), as well as changeable coupling means, which are provided for optionally connecting the transmission input shaft (20) through one of the gear wheels (21,22) with gear wheels (27,28) of the gear wheel set (24), which are a small-diameter and a large-diameter gear wheel (27,28), wherein the spindle (15) extends perpendicular to the transmission input shaft (20), and the spindle (15) and the transmission input shaft (20) are mounted in a shared bearing block (16), **characterized in that** the small-diameter gear wheel (27) is constantly in engagement with the large-diameter gear wheel (22) of the transmission input shaft (20).

2. Device according to claim 1, **characterized in that** the gear wheel set (24) is made in one piece with a transmission output shaft (23).

3. Device according to claim 1, **characterized in that** the small-diameter gear wheel (27) of the gear wheel set (24) is provided as a positive connection of the transmission output shaft (23) with an internal toothing (31) of the remaining gear wheels (25,28) of the gear wheel set (24).

4. Device according to at least one of the preceding claims, **characterized in that** the large-diameter gear wheel (28) of the gear wheel set (24) has an internal toothing (28a), and is placed on a correspondingly provided toothing (25a) of a bevel gear of the bevel gear arrangement (14).

5. Device according to one of the preceding claims, **characterized in that** the pinion (21) of the transmission input shaft (20) is designed as a means for coupling the transmission input shaft (20) with the large-diameter gear wheel (22) having an internal toothing (30).

6. Device according to one of the preceding claims, **characterized in that** the large-diameter gear wheel (22) of the transmission input shaft (20) has a pot-shaped area (29) provided to receive the pinion (21) in an intermediate position.

7. Device according to one of the preceding claims, **characterized in that** the pinion (21) of the transmission input shaft (20) is situated closer to the spindle (15) than is the large-diameter gear wheel (22).

8. Device according to one of the preceding claims, **characterized in that** the transmission input shaft (20) is made in one piece with the pinion (21).

9. Device according to one of the preceding claims, **characterized in that** the transmission input shaft (20) and the transmission output shaft (23) are mounted in a cover (32) that closes an opening in the outer sleeve (5).

10. Device according to claim 9, **characterized in that** the cover (32) is a single piece.

11. Device according to one of the preceding claims, **characterized in that** the transmission input shaft (20) has at least one groove (38) to receive radially inwardly biassed latching elements (40) arranged in cartridges (39) of the cover (32) or of the bearing block (16).

12. Device according to one of the preceding claims, **characterized in that** the cover (32) is made of a sintered material.

13. Device according to one of the preceding claims, **characterized in that** the spindle (15) is arranged eccentrically of the supporting element (3).

14. Device according to one of the preceding claims, **characterized by** an electric motor (45) the output shaft of which is identical with the transmission input shaft (20).

15. Device according to one of claims 1 to 14, **characterized in that** the spindle nut (19) has an upwardly open, pot-shaped interior (62).

16. Device according to claim 15, **characterized in that** the interior (62) of the spindle nut (19) is bounded by three collar sections (60a to c) at the same level, and that the spindle nut (19) has a lower-lying collar section (60d) in the zone of the large-diameter gear wheel (22).

17. Device according to claim 16, **characterized in that** the spindle nut (19) has an upwardly extending intermediate wall (61) above the lower-lying collar section (60d).

18. Device according to.one of the preceding claims, **characterized in that** the bearing block (16) has a recess (72) in its upper side.

19. Device according to one of the preceding claims, **characterized in that** in the bearing block (16) the bearing bore (37) for the threaded input shaft (20) extends to the through bore (73) for the spindle (15).

20. Device according to one of the preceding claims, **characterized in that** the bearing block (16) is connected on three sides (70a-c) with the outer sleeve (5), wherein the fourth side (70d) is arranged spaced from the outer sleeve (15).

21. Device according to one of the preceding claims, **characterized in that** a catchment basin (43) for lubricants is arranged below the gear wheel (22).

22. Device according to one of the preceding claims, **characterized in that** the outer sleeve (5) has local stampings (49) in the region of the gear transmission (13).

## Revendications

1. Dispositif pour le support d'une semi-remorque d'un véhicule articulé comprenant un élément de support (3) apte à se déplacer en hauteur à la manière d'un télescope et présentant un manchon externe (5) et un manchon interne (4), une broche (15) montée dans l'élément de support (3) et qui peut être actionnée via un agencement de roue dentées coniques (14) par un changement de vitesse du type à plusieurs échelons, et un écrou de la broche (19) coopérant avec la broche (15) et disposé en engrènement avec un des manchons (4), le changement de vitesse présentant un arbre d'entrée de transmission par engrenage (20) présentant un pignon (21) et une roue dentée (22) à grand diamètre, un arrangement de roue dentées (24) montées en rotation et coopérant avec les roues dentées de l'arbre d'entrée de transmission par engrenage (21, 22) et avec l'agencement de roues dentées coniques (14), ainsi qu'un moyen d'embrayage commutable qui est réalisé pour la liaison optionnelle de l'arbre d'entrée de transmission par engrenage (20) via une des roues dentées (21, 22) avec des roues dentées de l'arrangement des roue dentées (24) qui sont une roue dentée à petit diamètre et une roue dentée à grand diamètre (27, 28), dans lequel la broche (15) s'étend perpendiculairement à l'arbre d'entrée de transmission par engrenage (20), et la broche (15) et l'arbre d'entrée de transmission par engrenage (20) sont montés dans un support de palier commun (16), **caractérisé en ce que** la roue dentée à petit diamètre (27) engrène continuellement avec la roue à grand diamètre (22) de l'arbre d'entrée de la transmission par engrenage (20).

2. Dispositif selon la revendication 1, **caractérisé en ce que** l'arrangement de roues dentées (24) est réalisé en une seule pièce avec un arbre d'entrée de transmission par engrenage (23).

3. Dispositif selon la revendication 1, **caractérisé en ce que** la roue dentée à petit diamètre (27) de l'arrangement de roue dentée (24) est réalisée sous la forme d'une liaison mécanique de l'arbre d'entrée de transmission par engrenage (23) avec une denture interne (31) des autres roues dentées (25, 28) de l'arrangement de roues dentées (24).

4. Dispositif selon l'une quelconque des revendications précédentes, **caractérisé en ce que** la roue dentée à grand diamètre (28) de l'arrangement de roues dentées (24) présente une denture interne (28a) et vient s'enficher sur une denture (25a), réalisée de manière correspondante, d'une roue dentée conique (25) de l'agencement de roues dentées coniques (14).

5. Dispositif selon l'une quelconque des revendications précédentes, **caractérisé en ce que** le pignon (21) de l'arbre d'entrée de transmission par engrenage (20) est réalisé sous la forme d'un moyen d'embrayage de l'arbre d'entrée de transmission par engrenage (20) avec la roue dentée à grand diamètre (22) présentant une denture interne (30).

6. Dispositif selon l'une quelconque des revendications précédentes, **caractérisé en ce que** la roue dentée à grand diamètre (22) de l'arbre d'entrée de transmission par engrenage (20) présente une zone (29) en forme de pot prévue pour la réception du pignon (21) dans une position médiane.

7. Dispositif selon l'une quelconque des revendications précédentes, **caractérisé en ce que** le pignon (21) de l'arbre d'entrée de transmission par engrenage (20) est disposé plus près de la broche (15) que la roue dentée à grand diamètre (22).

8. Dispositif selon l'une quelconque des revendications précédentes, **caractérisé en ce que** l'arbre d'entrée de transmission par engrenage (20) est réalisé en une seule pièce avec le pignon (21).

9. Dispositif selon l'une quelconque des revendications précédentes, **caractérisé en ce que** l'arbre d'entrée de transmission par engrenage (20) et l'arbre de sortie de transmission par engrenage (23) sont montés dans un recouvrement (32) fermant une ouverture du manchon externe (5).

10. Dispositif selon la revendication 9, **caractérisé en ce que** le recouvrement (32) est réalisé en une seule pièce.

11. Dispositif selon l'une quelconque des revendications précédentes, **caractérisé en ce que** l'arbre d'entrée de transmission par engrenage (20) présente au moins une rainure (32) pour la réception d'éléments d'encliquetage (40) disposés dans des cartouches (39) du recouvrement (32) ou du support de palier (16), qui sont mis en état de précontrainte vers l'intérieur en direction radiale.

12. Dispositif selon l'une quelconque des revendications précédentes, **caractérisé en ce que** le recouvrement (32) est réalisé en un matériau fritté.

13. Dispositif selon l'une quelconque des revendications précédentes, **caractérisé en ce que** la broche (15) est disposée à l'extérieur du milieu de l'élément de support (3).

14. Dispositif selon l'une quelconque des revendications précédentes, **caractérisé par** un moteur électrique (45) dont l'arbre de sortie est identique à l'arbre d'entrée de transmission par engrenage (20).

15. Dispositif selon l'une quelconques des revendication 1 à 14, **caractérisé en ce que** l'écrou de la broche (19) présente un espace interne (62) en forme de pot ouvert vers le haut.

16. Dispositif selon la revendication 15, **caractérisé en ce que** l'espace interne (62) de l'écrou de la broche (19) est délimité par trois sections de rebords (60a à c) se trouvant à la même hauteur, et **en ce que** l'écrou de la broche (19) présente une section de rebord (60d) située plus bas dans la zone de la roue dentée (22) à grand diamètre.

17. Dispositif selon la revendication 16, **caractérisé en ce que** l'écrou de la broche (19) présente, au-dessus de la section de rebord (60d) situé plus bas, une paroi intermédiaire (61) s'étendant vers le haut.

18. Dispositif selon l'une quelconque des revendications précédentes, **caractérisé en ce que** le support de palier (16) présente un renfoncement (72) sur son côté supérieur.

19. Dispositif selon l'une quelconque des revendications précédentes, **caractérisé en ce que**, dans le support de palier (16), l'alésage de palier (17) pour l'arbre d'entrée de transmission par engrenage (20) s'étend jusqu'à l'alésage de passage (73) pour la broche (15).

20. Dispositif selon l'une quelconque des revendications précédentes, **caractérisé en que** le support de palier 16 est relié, sur trois côtés (70a - c)au manchon externe (5), le quatrième côté (70d) étant disposé à l'écart du manchon externe (5).

21. Dispositif selon l'une quelconque des revendications précédentes, **caractérisé en ce qu'**en dessous de la roue dentée (22) est disposée une cuvette de récolte (43) pour des lubrifiants.

22. Dispositif selon l'une quelconque des revendications précédentes, **caractérisé en ce que** le manchon externe (5) présente des renfoncements localisés (49) obtenus par estampage dans la zone du changement de vitesses (13).
